# EUROPEAN PATENT APPLICATION

(11) **EP 4 167 495 A1**
(43) Date of publication of application: **19.04.2023**
(21) Application number: 21202976.3
(22) Date of filing: 15.10.2021
(51) Int. Cl.: H04B 7/0408, H04L 69/24

(54) **METHOD FOR USER EQUIPMENT FOR ADJUSTING A TRANSMISSION PARAMETER, METHOD FOR A COMMUNICATION DEVICE, APPARATUS, VEHICLE AND COMPUTER PROGRAM**

(71) Applicant: VOLKSWAGEN AG, 38440 Wolfsburg (DE); Seat, S.A., 08760 Martorell (ES)
(72) Inventor: PFADLER, Andreas, 13357 Berlin (DE); MONTERO BAYO, Luca, 08011 Barcelona (ES)
(74) Representative: 2SPL Patentanwälte PartG mbB

(57) **Abstract**

Embodiments relate to a method 100 for user equipment. The method 100 for the user equipment for adjusting a transmission parameter used for communication with a communication device comprises determining 110 first capability information about a communication capability of the user equipment and obtaining 120 second capability information about a communication capability of the communication device. Further, the method 100 comprises determining 130 at least one communication parameter for communication with the communication device based on the first capability information and on the second capability information and transmitting 140 the at least one communication parameter to the communication device to adjust the transmission parameter.

## Description

The present disclosure relates to the field of wireless communication. Embodiments relate to a method for user equipment for adjusting a transmission parameter, a method for a communication device, an apparatus, a vehicle and a computer program, more particularly, but not exclusively, to a concept for adjusting a transmission parameter used for communication with another user equipment, e.g., to adjust a transmission parameter.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem.

US 2019 / 0319 840 A1 reveals a method for wireless communication by a user equipment. The method generally includes determining one or more parameters corresponding to quality-of-service information for communication of data using a V2X communication protocol and reporting the one or more parameters by transmitting a first message. Further, the method comprises receiving a second message indicating configuration information corresponding to the communication of the data using the V2X communication protocol and communication the data based on the configuration information .

WO 2020 / 102 621 A1 reveals a method to address changes in quality of service in a communication link between two user equipment devices. The method includes establishing the communication link between a first user equipment device and a peer user equipment device. The communication link services an application executing on the first user equipment. The first user equipment device monitors a current quality of service on the communication link and detects a condition wherein the current quality of service may not be met. Adjusted configuration parameters for the application and new quality of service parameters for the communication link are determined. The adjusted configuration parameters are applied to the application and the new quality of service parameters are applied to the communication link. WO 2020 / 221 554 A1 reveals a piece of mobile vehicle equipment comprising a V2X communication management device, connected to a cellular communication network. The communication management device comprises a Radio Access Technology selection unit which determines the Radio Access Technologies available to be used for transmitting a data packet, associated with a V2X application executed by the piece of mobile vehicle equipment, to at least one receiving device. The selection unit is configured to select the available Radio Access Technologies from a set of Radio Access Technologies, depending on target Quality of Service information comprising an n-tuple of performance indicators, the n-tuple of performance indicators comprising at least one performance indicator and being determined from a set of performance indicators chosen according to the V2X application.

However, for a user equipment (UE) it may be still a challenging task to identify a communication node, which may be the most suitable to connect to, e.g., to achieve a desired transmission parameter and/or which may be at least sufficient enough to enable a desired service for the UE, e.g., streaming a video.

It is therefore a finding that an adjustment of a transmission parameter used for communication with a communication device may be improved by determining at least one communication parameter for communication with the communication device based on a first capability information of UE and on a second capability information of the communication device. This way, the UE may determine a transmission parameter which is supported by the communication device.

Examples provide a method for user equipment for adjusting a transmission parameter used for communication with a communication device. The method comprises determining first capability information about a communication capability of the user equipment and obtaining second capability information about a communication capability of the communication device. Further, the method comprises determining at least one communication parameter for communication with the communication device based on the first capability information and on the second capability information and transmitting the at least one communication parameter to the communication device to adjust the transmission parameter. Thus, the user equipment may determine a communication parameter for communication with the communication device, which may improve a transmission between the UE and the communication device. For example, the UE may identify a communication device, which can enable a desired service of a user of the UE, e.g., by providing a required data rate for the service.

In an example, the at least one communication parameter may belong to a beam used for communication. This way, the UE can adjust a beam, e.g., by adjusting a configuration of an antenna pattern, to improve a transmission.

In an example, the method may further comprise receiving from the communication device information about a selected communication parameter. This way, the UE can be informed about an appropriate communication parameter by the communication device.

In an example, the determination of the at least one communication parameter may be further based on a predicted performance of the transmission parameter belonging to the at least one communication parameter. This way, it can be ensured that user experience may be satisfying, for example.

In an example, the method may further comprise determining a predictive quality of service for each of the at least one communication parameter and transmitting the determined predictive quality of service (pQoS) for each of the at least one communication parameter to the communication device. This way, the communication device can be informed about possible pQoS, which can be used for communication with the UE.

In an example, the method may further comprise receiving at least one new communication parameter from the communication device, selecting a new communication parameter from the at least one new communication parameter for communication with the communication device and transmitting information about the selected new communication parameter to the communication device. This way, the UE may be enabled to use a communication parameter provided by the communication device, e.g., since the communication device may know which communication parameter is available.

Examples relate to a vehicle capable to perform the method as described above, wherein information about the environment may be obtained by determining information about the environment using one or more sensors of the vehicle and/or receiving information about the environment. This way, data for training an AI can be obtained in an easy way.

Examples relates to a method for a communication device for adjusting a transmission parameter used for communication with user equipment. The method comprises transmitting information to enable the user equipment to obtain information about a communication capability parameter of the communication device and receiving at least one communication parameter from the user equipment to adjust the transmission parameter. This way, the communication device can be informed about a desired communication device of the UE, which should be used for communication.

In an example, the method may further comprise selecting a communication parameter from the at least one communication parameter for communication with the user equipment and transmitting information about the selected communication parameter to the user equipment. This way, the communication device can select a communication parameter for communication with the UE and can inform the UE about the selected communication parameter.

In an example, the method may further comprise receiving information about a predictive quality of signal for each of the least one communication parameter and wherein selecting is further based on the predictive quality of signal. Thus, the communication device can select an appropriate communication parameter based on a pQoS, e.g., required for a desired service of a user of the UE.

In an example, the method may further comprise, if not enough resource of the transmission parameter belonging to the at least one communication parameter is available transmitting a message informing the user equipment that a use of the at least one communication parameter is currently not possible. This way, the UE can be informed that a communication parameter cannot be used for communication at the moment.

In an example, the method may further comprise determining at least one new communication parameter, transmitting the at least one new communication parameter to the user equipment and receiving information about a selected new communication parameter from the user equipment. This way, the communication device can provide the UE a selection of communication parameters, such that a transmission can be improved.

In an example, the method may further comprise determining a predictive quality of service for each of the at least one new communication parameter and transmitting the determined predictive quality of service for each of the at least one new communication parameter to the user equipment. This way, the communication device can inform the UE about a pQoS for the respective communication device, which may enable the UE to select a communication parameter, e.g., to ensure that a desired service of the user can be used.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for user equipment;
Fig. 2 shows an example of a method for a communication device; and
Fig. 3 shows a block diagram of an apparatus.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

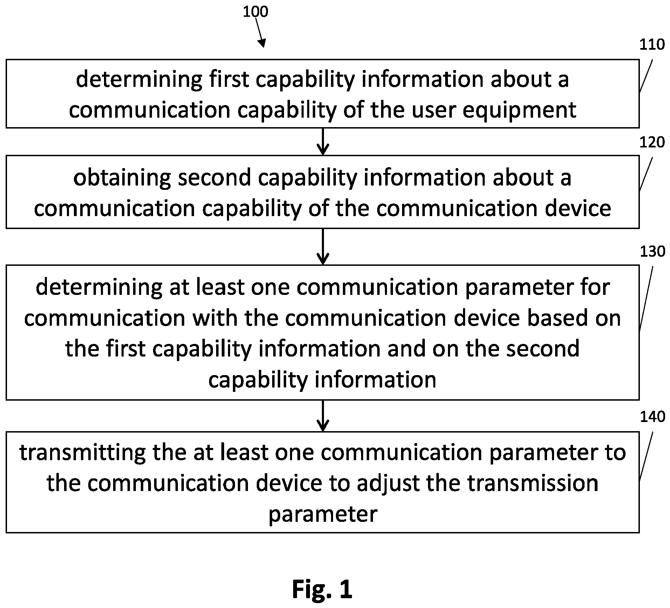

Fig. 1 shows an example of a method 100 for user equipment. The method 100 for the UE is for adjusting a transmission parameter used for communication with a communication device. The method 100 comprises determining 110 first capability information about a communication capability of the user equipment and obtaining 120 second capability information about a communication capability of the communication device. Further, the method 100 comprises determining 130 at least one communication parameter for communication with the communication device based on the first capability information and on the second capability information and transmitting 140 the at least one communication parameter to the communication device to adjust the transmission parameter. Thus, the UE can determine a communication parameter in an improved way, which may enable the UE and the communication device to communicate in an improved way.

The UE may communicate in a mobile communication system with the communication device, e.g., a base station. For example, the UE and the communication device may communicate in/via a mobile communication system. The mobile communication system may comprise a plurality of transmission points and/or base stations operable to communicate radio signals with the UE. In an example, the mobile communication system may comprise the UE and the communication device.

A communication device, e.g., the communication device, can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to UE, such as the UE. Such a radio signal may comply with radio signals as, for example, standardized by 3GPP or, generally, in line with one or more of the above listed systems. Thus, a communication device may correspond to a NodeB, an eNodeB, a BTS, an access point, etc.

The mobile communication system may be cellular. The term cell refers to a coverage area of radio services provided by a transmission point, a remote unit, a remote head, a remote radio head, communication device, UE or a NodeB, an eNodeB, respectively. The terms cell and base station may be used synonymously. A wireless communication device, e.g., the UE, can be registered or associated with at least one cell (e.g., the communication device), i.e. it can be associated to a cell such that data can be exchanged between the network and the mobile in the coverage area of the associated cell using a dedicated channel, connection or connection.

In general, the UE is a device that is capable of communicating wirelessly. In particular, however, the UE may be a mobile UE, i.e., UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the communication device may be configured to communicate in a cellular mobile communication system. Accordingly the UE and the communication device may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the communication device may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access

(WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/communication device may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the communication device may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the communication device may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the UE and the communication device may be initiated using the protocols of the mobile communication system, or using a short-range communication system, such as via a wireless local area network outlined above.

As is evident from the above example, while the communication between UE and communication device occurs via the mobile communication system, additional communication and/or alternatively communication (e.g., the communication device is a vehicle) between the UE and the communication device may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc. The capability information may define a capability of a communication device, e.g., the UE or the communication device, to communicate via a radio channel. For example, the capability information may comprise information about an antenna, an antenna pattern for beam forming, a radio access technology, a supported signal intensity, a signal-to-noise ratio (SNR), a latency time, a data rate, a capacity, a system-uptime, an occupancy rate of a radio channel, an occupancy rate of an antenna, a combination of mentioned supported parameters, etc. For example the capability information may comprise each information about a communication device which can be influenced by the transmission parameter.

The transmission parameter(s) may define/results in a variation of a channel strength over time and/or over frequency. For example, a choice of the transmission parameter(s) of the radio channel may depend on large-scale fading effects and/or on small-scale fading effects. For example, the choice of the transmission parameter(s) of the radio channel may depend on a coherence time (respectively a Doppler spread), a frequency coherence (respectively a Doppler spread or coherence bandwidth), a noise of the channel, an attenuation of the channel, a coverage of the UE (and respectively of the communication device).

The transmission parameter may depend on the communication parameter. For example, a transmission parameter can be achieved by selecting an appropriate communication parameter. For example, a communication parameter may be a spatial angle, a spatial domain, a transmission power, a beam form, a chosen antenna of a plurality of antennas for beamforming or a repetition rate of an CSI report. Thus, by determining a communication parameter a transmission parameter for communication between the UE and the communication device may be improved.

Optionally or alternatively, the communication parameter may comprise information about a usability of the UE. For example, the communication parameter may comprise information that a desired/required configuration of the UE is available at a certain time, e.g., in the future. Thus, the communication parameter can be used to adjust the transmission parameter for a future use.

Determining 110 the first capability information can be done by accessing a storage media of the UE, in which the capability of the UE is stored. Optionally or alternatively, the first capability information can be determined based on an actual/future use of the UE. For example, if an antenna pattern of the UE is used for communicating with another UE and cannot be used to communicate with the communication device (e.g., the antenna pattern may form a highly directional beam in an opposite direction of the communication device), the UE may consider this information for determining the first capability information.

Obtaining 120 the second capability information can be done by receiving the capability information, e.g., from the communication device. Optionally or alternatively, the second capability information can be determined, e.g., by use of a storage media. For example, the UE may know a model of the communication device, e.g., a model of a smartphone, and the UE may have stored information about the communication capability of this smartphone model in the storage media, thus enabling the UE to determine the second capability information.

Determining 130 the at least one communication parameter may depend on a desired service type, a desired service priority, an antenna pattern, a latency rate, a usage time, etc. For example, a communication parameter may be only determined if the communication parameter is supported by both the first capability information and the second capability information. This way, it can be ensured that the communication parameter can be used to adjust the transmission parameter.

Transmitting 140 the at least one communication parameter to the communication device can be performed by any suitable message, e.g., by a broadcast message, groupcast message or unicast message. Thus, the communication parameter can be transmitted in a desired way, e.g., using a broadcast message to transmit the communication parameter to the communication device. For example, if the UE is a vehicle and the communication device is another vehicle the communication parameter may be transmitted via V2X communication.

For example, a plurality of communication parameters can be transmitted 140 to the communication device. This way, the communication device can be enabled to select an appropriate communication parameter. For example, a communication device may be only capable to use one communication parameter of the plurality of communication parameters, since the other parameter may be blocked for communication with another communication device. Thus, the method 100 can be improved, because a likelihood that at least one communication parameter can be used to adjust the transmission parameter can be increased.

In an example, the at least one communication parameter may belong to a beam used for communication. For example, the communication parameter may describe a beamform and/or an antenna parameter, e.g., a setting for an antenna pattern to generate a (directional) beam. This way, the transmission parameter can be adjusted in an improved way, e.g., to a capability of the UE and/or the communication device.

In the example, the method 100 may further comprise receiving from the communication device information about a selected communication parameter. This way, the UE can be informed about a usage of a communication parameter. For example, the UE may transmit a plurality of communication parameter and by receiving the selected communication parameter the UE is enabled to use the correct communication parameter. Optionally or alternatively, the UE may only start a communication using the transmitted 140 communication parameter after reception of the information. For example, the UE may only transmit 140 one communication parameter, but the communication device may be not capable to use this communication parameter too (e.g., the communication parameter is occupied for another communication device, which the UE cannot know if the second capability information was determined based on a storage media of the UE, for example). Thus, the UE may not receive information about a selected communication device and may not start to use the communication parameter for communication.

In an example, the determination of the at least one communication parameter may be further based on a predicted performance of the transmission parameter belonging to the at least one communication parameter. For example, a user of the UE may want to use a desired service, e.g., starting a streaming app, video call app, etc., which may require a high data rate. Thus, the UE may predict a performance of the transmission parameter to ensure if the service can be used for a certain time. For example, the predicted performance may depend on the transmission parameter, an environment, a movement of the UE etc. The UE may be located in an environment with a high density of mobile obstacles and thus the use of a highly directional beam for communication with the communication device may be blocked from time to time by a moving obstacle. Thus, a predicted performance may be decreased.

For example, the UE may obtain information about the environment in real-time, e.g., by a measurement or receive real-time measurement data, which can be used to determine the predictive performance of the transmission parameter, e.g., by determining a predictive environmental model. Optionally or alternatively, the UE may receive the predictive environmental model to determine the predicted performance from another communication device, e.g., an infrastructure, UE in the environment of the UE, a network entity, etc.

For example, the UE can receive information from a mobile obstacle (e.g., another vehicle) and/or an immobile obstacle (like infrastructure, e.g., a traffic light) that the mobile obstacle may vanish (e.g., the vehicle may drive away) in a predefined time (e.g., a red phase of the traffic light). Thus, the predicted environmental model may predict this change of the environment. For example, the predicted performance may depend on this change of the environment.

For example, the UE may obtain information about a mobile obstacle (e.g., another vehicle or bus) in the environment, e.g., a movement speed of the mobile obstacle. Thus, the UE can determine the predicted environmental model based on this information, e.g., the UE may predict the change of the environment by the movement speed of the mobile obstacle to determine a predictive environmental model. In principle an obstacle, can be an object in the line-of-sight between the UE and the communication device and/or an object in a location that cause non-negligible change in the electromagnetic field at the UE.

For example, the UE (e.g., a vehicle) may use a wide variety of on-board sensor data types, including radar sensor data and lidar sensor data, but also, e.g., vision-related sensors such as camera and IR sensors, as well as ultrasound sensors to determine the positions of the communication devices to determine information used to determine information for the predicted performance.

In an example, the method 100 may further comprise determining a predictive quality of service for each of the at least one communication parameter and transmitting the determined predictive quality of service for each of the at least one communication parameter to the communication device. This way, a pQoS can be ensured for the communication between the UE and the communication device, and a service can be enabled based on the pQoS.

For example, the UE may be a first vehicle and the communication device may be a second vehicle and the first vehicle may want to use sensor sharing with the second vehicle, e.g., to see around a cross section. This may improve a tele-operated driving session, for example.

For example, the first vehicle and the second vehicle may belong to a platoon of vehicles. The first vehicle and the second vehicle may need to exchange data in the platoon, e.g., settings for communication in the platoon. This data exchange can be improved by transmitting at least one communication parameter, especially by transmitting a plurality of communication parameter. This way, the second vehicle, which may have to communicate with other vehicles of the platoon can determine an appropriate communication parameter for communication with the first vehicle. For example, all vehicles in the platoon may exchange communication parameter among each other to ensure a reliable communication within the platoon. For example, the fist vehicle may transmit three communication parameters to the second vehicle, which may select a first communication parameter from the plurality of communication parameter. Further, the second vehicle may transmit all the rest communication parameters (two) to a third vehicle. This way, the third vehicle can select a second communication parameter for communication with the first vehicle and may transmit the last not used communication parameter to a fourth vehicle. Thus, be receiving, selecting and transmitting communication parameters a plurality of vehicles can adjust transmission parameters for communication among each other, e.g., for communication with the first vehicle.

A V2X communication between the first vehicle and the second vehicle may be by a Wireless Local Area Network (WLAN) technology and may work directly between vehicle and vehicle (V2V) and/or traffic infrastructure (V2I), which form a vehicular ad-hoc network as two V2X senders come within each other's range. Messages like Cooperative Awareness Messages (CAM) or Basic Safety Message (BSM) and Decentralized Environmental Notification Messages (DENM) may be used for communication between the vehicles. Other roadside infrastructure related messages are Signal Phase and Timing Message (SPAT), in Vehicle Information Message (IVI), and Service Request Message (SRM).

For example, the at least one communication parameter can be transmitted by a network layer (layer 3 of an Open Systems Interconnection (OSI) model) e.g., by use of a Radio Resource Control (RRC) protocol used between UE and base station. For example, a RRC as used in 5G on an Air interface. This protocol is specified by 3GPP in TS 38.331[3] for 5G New Radio. The use of an RRC layer may be sufficient for services with low latency time requirements, e.g., for example to use a sensor of the second vehicle while waiting at a red traffic light. For example, the first vehicle may transmit the at least one communication parameter using an RRC layer.

Optionally or alternatively, the at least one communication parameter can be transmitted by a data link layer (layer 2 of an OSI model), e.g., a data link layer described in ETSI EN 302 663 V1.3.1 (2020-01) under section 4.3. The use of the data link layer may increase time critical performance, since communication using the data link layer is faster as communication using the network layer. Thus, for a service with higher latency time requirements, e.g., ToD or platooning, the use of a data link layer may decrease time needed to perform the method 100 and/or an update rate (to update the at least one communication parameter).

Optionally or alternatively, the at least one communication parameter can be transmitted by a physical layer (layer 1 of an OSI model), e.g., a physical layer described in ETSI EN 302 663 V1.3.1 (2020-01) under section 4.2. The use of the physical layer may further increase time critical performance, since communication using the physical layer is faster as communication using data link layer. Thus, for a service with higher latency time requirements, e.g., ToD or platooning, the use of a data link layer may decrease time needed to perform the method 100 and/or an update rate (to update the at least one communication parameter).

In an example, the method 100 may further comprise receiving at least one new communication parameter from the communication device, selecting a new communication parameter from the at least one new communication parameter for communication with the communication device and transmitting information about the selected new communication parameter to the communication device. This way, the UE may be informed about the at least one new communication parameter, which can be used for communication with the communication device. For example, the transmitted 140 communication parameters may be not available at a side of the communication device and thus the communication device may propose at least one new communication parameter for communication.

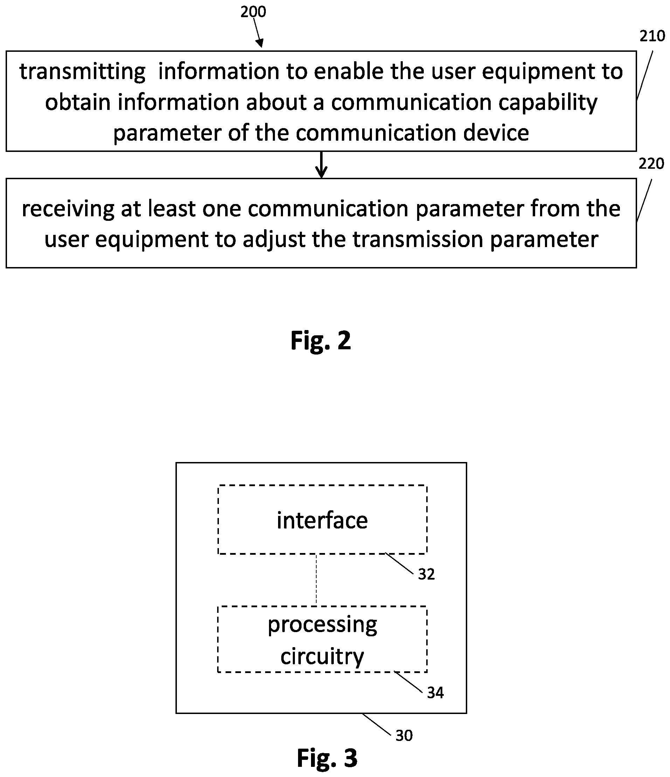

More details and aspects are mentioned in connection with the embodiments described above and/or below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for a communication device. The method 200 for the communication device is for adjusting a transmission parameter used for communication with user equipment. The method 200 comprises transmitting 210 information to enable the user equipment to obtain information about a communication capability parameter of the communication device and receiving 220 at least one communication parameter from the user equipment to adjust the transmission parameter. The communication device may be a counterpart to the UE described with reference to Fig. 1. For example, the communication device may be further UE, a base station, a vehicle, etc.

Transmitting 210 information may comprise transmitting information about a model of the communication device. For example, the communication device may be the same device as the UE, e.g., a smartphone, and/or the UE may comprise a storage media with a data set of communication capabilities of different UEs, e.g., different vehicles (especially for platooning). Thus, the UE may be capable to determine the capability information based on information about the model of the communication device. This way, a data traffic may be reduced. Optionally or alternatively, the communication device may transmit its communication capability to the UE. This way, the communication device can inform the UE about a capacity, e.g., for a desired communication channel.

In an example, the method 200 may further comprise selecting a communication parameter from the at least one communication parameter for communication with the user equipment and transmitting information about the selected communication parameter to the user equipment. This way, the communication device can inform the UE about a selected communication parameter, e.g., that the communication parameter can be used to adjust the transmission parameter and a communication can be established/used.

In an example, the method 200 may further comprise receiving information about a predictive quality of signal for each of the least one communication parameter and wherein selecting is further based on the predictive quality of signal. This way, the communication parameter can be selected based on a pQoS, which may be crucial for, e.g., sensor sharing, platooning, etc.

In an example, the method 200 may further comprise if not enough resource of the transmission parameter belonging to the at least one communication parameter is available transmitting a message informing the user equipment that a use of the at least one communication parameter is currently not possible. This way, the UE can be informed that a communication is not possible. For example, the UE may determine another at least one communication parameter for communication and may transmit the other at least one communication parameter to the communication device.

In an example, the method 200 may further comprise determining at least one new communication parameter, transmitting the at least one new communication parameter to the user equipment and receiving information about a selected new communication parameter from the user equipment. This way, the communication device can propose at least one new communication device to the UE, e.g., with transmitting the message about the currently not possible communication with the at least one communication parameter.

In an example, the method 200 may further comprise determining a predictive quality of service for each of the at least one new communication parameter and transmitting the determined predictive quality of service for each of the at least one new communication parameter to the user equipment. This way, a selection of the UE from the at least one new communication parameter can be additionally based on the pQoS, e.g., for sensor sharing, platooning, etc.

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3).

Fig. 3 shows a block diagram of an apparatus 30. The apparatus 30 comprises one or more interfaces 32 configured to communicate with a communication device or user equipment. The apparatus 30 further comprises processing circuitry 34 configured to control the one or more interfaces and to perform the method for UE described above (e.g., described with respect to Fig.1) and/or the method for a communication device described above (e.g., described with respect to Fig. 2).

For example, the apparatus 30 can be the UE, where the interface 32 is configured to communicate with the communication device. Alternatively, the apparatus 30 can be the communication device, where the interface 32 is configured to communicate with the UE.

In an example, a vehicle comprises the apparatus 30. Thus, the vehicle may be enabled to perform the methods described with reference to Fig. 1 and Fig. 2.

For example, the method for a transceiver device (e.g., the UE as described with reference to Fig. 1) to negotiate and predict the QoS depending on the used beamforming setup with another transceiver device (e.g., the communication device described with reference to Fig. 2) may be performed by, e.g. a vehicle (or by a cellular phone, a base station, etc). This method may comprise for the transceiver device of the vehicle different sets of requirements, e.g., a throughput (data rate), a Packet inter-reception time (PIR)/latencies, a confidence level, etc. The vehicle may be able to state different considering the capability of application adaptation, e.g. set 1: 10Mbps, PIR=10ms, confidence =95% (best/desired), set 2: 10Mbps, PIR=20ms, confidence =98% (second priority), set 3: 8Mbps, PIR=10ms, confidence =98% (third priority), set lowest possible requirements: 3 Mbps, PIR=40 ms, confidence=90%. Further the capabilities of the transceiver device may be, e.g., beamforming capabilities, beam width, antenna directivity, resolution (azimuth), elevation, beam update rate, ssed bandwidth and carrier frequency, signaling, such as pilots, synchronization signals etc., positioning accuracy, etc.

For example, the transceiver device may have received information such as beamforming capabilities etc. from the other transceiver device and it may detect the other transceiver device via its sensors and/or assume a default capability based on its data base. The transceiver device may verify the different sets of requirements of considering its own capabilities and the expected/required set up of the other transceiver device. The set of possible configurations might be smaller than the set of requirements due to the estimated performance.

Further, the transceiver device may estimate the performance for distinct configurations and may be enabled to select a certain set of transceiver configuration corresponding to parameters of the transceiver device, e.g., for set 1: antenna gain G_1, beam update rate BR_1, beam width Theta_1, etc. For the set with the lowest possible requirements the transceiver device may send to the other transceiver device (e.g., via lower frequencies or with a most robust setup at mmWave bands, e.g.., the set with lowest possible requirements).

The other transceiver device may choose the best option it can do from the set. In case the other transceiver device is a base station with more knowledge on the communication link and environment it may also suggest to the transceiver device to change its beamforming parameters, e.g. to use a wider beam. In case the other communication device cannot support the lowest possible requirements, then the service cannot be used at mmWave bands with highly directive antennas. Therefore, the other transceiver device may propose to use lower frequency for that particular service. The other receiver device may reply to the transceiver device with the best configuration. The transceiver device may start the service and may communicate with the other transceiver node.

As shown in Fig. 3 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34. For example, the apparatus 30 can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 3 may comprise one or more optional additional features corresponding to one or more aspects mentioned in connection with the proposed concept or one or more examples described above (Fig. 1 ― 2).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference signs

- 30: apparatus
- 32: interface
- 34: processing circuitry
- 100: method for user equipment
- 110: determining first capability information
- 120: obtaining second capability information
- 130: determining at least one communication parameter
- 140: transmitting the at least one communication parameter
- 200: method for a communication device
- 210: transmitting information
- 220: receiving at least one communication parameter

## Claims

1. A method (100) for user equipment for adjusting a transmission parameter used for communication with a communication device, comprising:
determining (110) first capability information about a communication capability of the user equipment;
obtaining (120) second capability information about a communication capability of the communication device;
determining (130) at least one communication parameter for communication with the communication device based on the first capability information and on the second capability information; and
transmitting (140) the at least one communication parameter to the communication device to adjust the transmission parameter.

2. The method (100) according to claim 1, wherein
the at least one communication parameter belongs to a beam used for communication.

3. The method (100) according to any of the preceding claims, further comprising receiving from the communication device information about a selected communication parameter.

4. The method (100) according to any of the preceding claims, wherein
the determination of the at least one communication parameter is further based on a predicted performance of the transmission parameter belonging to the at least one communication parameter.

5. The method (100) according to claim any of the preceding claims, further comprising determining a predictive quality of service for each of the at least one communication parameter; and
transmitting the determined predictive quality of service for each of the at least one communication parameter to the communication device.

6. The method (100) according to any of the preceding claims, further comprising receiving at least one new communication parameter from the communication device;
selecting a new communication parameter from the at least one new communication parameter for communication with the communication device;
and transmitting information about the selected new communication parameter to the communication device.

7. A method (200) for a communication device for adjusting a transmission parameter used for communication with user equipment, comprising:
transmitting (210) information to enable the user equipment to obtain information about a communication capability parameter of the communication device; and
receiving (220) at least one communication parameter from the user equipment to adjust the transmission parameter.

8. The method (200) according to claim 7, further comprising
selecting a communication parameter from the at least one communication parameter for communication with the user equipment; and
transmitting information about the selected communication parameter to the user equipment.

9. The method (200) according to claim 8, further comprising
receiving information about a predictive quality of signal for each of the least one communication parameter; and
wherein selecting is further based on the predictive quality of signal.

10. The method (200) according to claim 7 ― 9, further comprising
if not enough resource of the transmission parameter belonging to the at least one communication parameter is available transmitting a message informing the user equipment that a use of the at least one communication parameter is currently not possible.

11. The method (200) according to any of the claims 7 - 10, further comprising
determining at least one new communication parameter;
transmitting the at least one new communication parameter to the user equipment; and receiving information about a selected new communication parameter from the user equipment.

12. The method (200) according to claim 11, further comprising
determining a predictive quality of service for each of the at least one new communication parameter; and
transmitting the determined predictive quality of service for each of the at least one new communication parameter to the user equipment.

13. An apparatus (30), comprising:
one or more interfaces (32) configured to communicate with a communication device;
and
processing circuitry (34) configured to control the one or more interfaces and to: perform the method according to any of claims 1 - 12.

14. A vehicle comprising the apparatus (30) according to claim 13.

15. A computer program having a program code for performing the method (100; 200) according to any one of claims 1 - 12, when the computer program is executed on a computer, a processor, or a programmable hardware component.
